# FASCICULE DE BREVET EUROPEEN

(11) **EP 1 812 203 B1**
(45) Date de publication et mention de la délivrance du brevet: **04.03.2009**
(21) Numéro de dépôt: 05810802.8
(22) Date de dépôt: 07.10.2005
(51) Int. Cl.: B23P 19/10, B64F 5/00, B23K 37/053, B25B 11/02, F16L 1/10, B23P 19/00

(54) **DISPOSITIF ET PROCÉDÉ POUR L'ASSEMBLAGE D'OBJETS ORIENTÉS**
VORRICHTUNG UND VERFAHREN ZUR ZUSAMMENSETZUNG AUSGERICHTETER OBJEKTE
DEVICE AND METHOD FOR THE ASSEMBLY OF ORIENTED OBJECTS

(30) Priorité: 25.10.2004 FR 0452435
(43) Date de publication de la demande: 01.08.2007
(73) Titulaire: AIRBUS France, 31060 Toulouse Cédex (FR)
(72) Inventeur: Frehel, François, décédé (FR); Thierry, Roger, 44350 Guerande (FR); Gautier, Christophe, 44250 Saint Brevin (FR)
(74) Mandataire: Schmit, Christian Norbert Marie
(86) Numéro de dépôt international: PCT/FR2005/050828
(87) Numéro de publication internationale: WO 2006/045969

(56) Documents cités:
- DE-A1- 4 334 116
- US-A- 3 772 753
- US-A- 3 870 288
- US-A- 4 641 819
- DATABASE WPI Section PQ, Week 198127 Derwent Publications Ltd., London, GB; Class P56, AN 1981-G2418D XP002333995 -& SU 770 727 A (SIKORSKII I P) 18 octobre 1980 (1980-10-18)
- PATENT ABSTRACTS OF JAPAN vol. 1999, no. 08, 30 juin 1999 (1999-06-30) -& JP 11 058074 A (KOMATSU LTD), 2 mars 1999 (1999-03-02)

## Description

La présente invention concerne un dispositif et un procédé pour l'assemblage d'objets orientés. Un tel dispositif et un tel procedé sont décrits dans le document US-A-3,772,753.

Un avion de ligne dissimule un ensemble particulièrement complexe de tuyauteries servant à l'acheminement de gaz ou de liquides par exemple pour le refroidissement des moteurs, l'alimentation en carburant, le système de freinage hydraulique... Les divers éléments composant ces tuyauteries doivent présenter des formes très particulières afin d'épouser les contours d'un avion et une forte résistance en pression.

L'assemblage de ces éléments nécessite la fabrication d'un mannequin d'assemblage spécifique à cette tuyauterie. Toute évolution ultérieure dans la géométrie tridimensionnelle de cette tuyauterie requiert donc la réalisation d'un nouveau mannequin de montage. Or le temps de développement d'un nouvel avion ou d'une nouvelle solution tend à se réduire rendant incompatible la durée de fabrication d'un nouvel outillage avec celle de réalisation d'une nouvelle tuyauterie.

De plus, les nouveaux programmes d'avions favorisent l'emploi de raccords orientés laissant présager une augmentation importante des coûts des mannequins d'assemblage ainsi que de la surface nécessaire à l'entreposage de ces mannequins et des coûts associés à ce stockage.

L'objectif de la présente invention est donc de proposer un dispositif et un procédé pour l'assemblage d'objets orientés, tels que des pièces d'une tuyauterie, simples dans leur conception et dans leur mode opératoire, économiques et permettant l'assemblage d'au moins deux objets orientés l'un par rapport à l'autre quelle que soit la géométrie d'assemblage.

Un autre objectif de cette invention vise à faciliter et à rentabiliser le déroulement et les opérations d'assemblage dans l'espace de ces objets orientés.

A cet effet, l'invention concerne un dispositif pour l'assemblage d'objets orientés, tels que des pièces d'une tuyauterie.

Selon l'invention, ce dispositif comprend :
- des moyens de déplacement en rotation autour d'un axe de rotation d'une première et deuxième embases,
- ladite première embase ayant un premier axe principal perpendiculaire à l'axe de rotation et comprenant des premiers moyens de support de ces objets, les premiers moyens de support étant mobiles en translation le long du premier axe principal,
- la deuxième embase ayant un deuxième axe principal perpendiculaire à l'axe de rotation et comprenant des deuxièmes moyens de support de ces objets et un dispositif à plateau tournant destiné à supporter et orienter angulairement un desdits objets,
- le dispositif à plateau tournant étant mobile en translation par rapport aux deuxièmes moyens de support le long du deuxième axe principal,
- et des moyens de visualisation d'au moins l'angle de rotation du plateau et de la position de la deuxième embase.

Dans différents modes de réalisation particuliers du dispositif pour l'assemblage d'objets orientés, chacun ayant ses avantages particuliers et susceptibles de nombreuses combinaisons techniques possibles:
- le plateau tournant comprend une rainure en Té ménagée de façon à permettre le support d'un élément de centrage,
- l'élément de centrage comprend un orifice d'axe parallèle à la surface du plateau tournant et des moyens de fixation pour recevoir un adaptateur associé à un des objets,
- les premiers moyens de support sont mobiles en rotation autour d'un axe perpendiculaire au premier axe principal et en translation le long de cet axe perpendiculaire, et les deuxièmes moyens de support sont mobiles en translation le long d'un axe perpendiculaire au deuxième axe principal,
- le dispositif à plateau tournant comprend des moyens d'entraînement en rotation du plateau tournant,
- les moyens d'entraînement comprennent un moteur pas à pas et une vis sans fin,
- le dispositif à plateau tournant coopère avec les deuxièmes moyens de support pour définir une zone d'assemblage des objets,
- les deuxièmes moyens de support comprennent une première paroi de butée fixe comportant une fente destinée à recevoir un des objets, une deuxième paroi de butée parallèle à la première paroi et espacée de cette dernière, la deuxième paroi étant mobile en translation le long d'un axe perpendiculaire au deuxième axe principal,
- les moyens de déplacement en rotation des première et deuxième embases comprennent un plateau circulaire gradué, l'axe de rotation étant normal à la surface du plateau et passant par son centre,
- le dispositif comprend une table comprenant une surface plane, cette surface comportant un réseau d'orifices et des troisièmes moyens de support des objets, le plateau circulaire étant fixé dans le prolongement de la table,
- les moyens de visualisation comprennent un codeur couplé aux moyens d'entraînement en rotation du plateau tournant et un boîtier afficheur.

L'invention concerne également un procédé d'assemblage d'objets orientés, tels que des pièces d'une tuyauterie. Selon l'invention,
- on définit un plan de référence de l'assemblage et un plan d'orientation, ces plans étant normaux l'un par rapport à l'autre, puis on effectue les étapes suivantes :
- a) on place dans le plan de référence un premier point d'un premier objet à assembler sur des premiers moyens de support et un deuxième point proche d'une extrémité du premier objet sur des deuxièmes moyens de support, le premier objet étant alors contenu entre ces deux points dans le plan de référence de l'assemblage,
- b) on monte un deuxième objet à assembler sur un dispositif à plateau tournant et on déplace angulairement ce plateau tournant pour orienter le deuxième objet par rapport au plan d'orientation, le plan de référence contenant un axe de ce deuxième objet,
- c) on détermine une zone d'assemblage des objets en déplaçant en translation le dispositif à plateau tournant vers les deuxièmes moyens de support le long d'un axe commun parallèle au plan de référence, les premiers moyens de support d'une part, et les deuxièmes moyens de support et le dispositif à plateau tournant d'autre part, étant mobiles en rotation autour d'un même axe de rotation perpendiculaire au plan de référence, les premiers moyens de support étant mobiles en translation le long d'un axe perpendiculaire à l'axe de rotation,
- d) on assemble ces objets par sertissage, soudure, ou autre,
- on définit alors un système de coordonnées cartésiennes (x, y, z) en affectant l'origine (0, 0, 0) de ce système à un point de centrage de ce premier assemblage,
- on répète éventuellement les étapes a), b), c) et d) pour assembler un nouvel objet à l'assemblage précédemment obtenu, des moyens de visualisation permettant d'affecter des coordonnées (x, y, z) à ces éléments de sorte à permettre leur orientation dans l'espace par rapport à une géométrie d'assemblage.

Dans différents modes de réalisation, la présente invention concerne également les caractéristiques suivantes qui devront être considérées isolément ou selon toutes leurs combinaisons techniquement possibles :
- le point de centrage est placé à l'intersection des plans de référence et d'orientation, l'affectation de l'origine étant réalisée de sorte qu'un autre axe du deuxième objet soit contenu dans le plan d'orientation.
- les moyens de visualisation donnent au moins l'angle de rotation du plateau tournant et de la position de l'axe commun reliant le dispositif à plateau tournant et les deuxièmes moyens de support.

Le dispositif et le procédé d'assemblage d'objets orientés les uns par rapport aux autres tels que décrit précédemment peuvent avantageusement être utilisés pour des tuyauteries d'avions ou de bateaux.

L'invention sera décrite plus en détail en référence aux dessins annexés dans lesquels:
- la figure 1 est une représentation schématique du dispositif pour l'assemblage d'objets orientés selon un mode de réalisation de l'invention;
- la figure 2 est une représentation schématique des deuxièmes moyens de support (Fig. 2a) et une vue élargie de la partie supérieure de ces deuxièmes moyens de support avec leur butée pivotante (Fig. 2b) selon un mode de réalisation de l'invention;
- la figure 3 est une représentation schématique du dispositif à plateau tournant de la figure 1 en vue de profil arrière (Fig. 3a) et en vue de profil avant (Fig. 3b);
- la figure 4 est une représentation schématique d'un assemblage repéré dans un système de coordonnées cartésiennes (x, y, z) selon un mode de réalisation de l'invention;

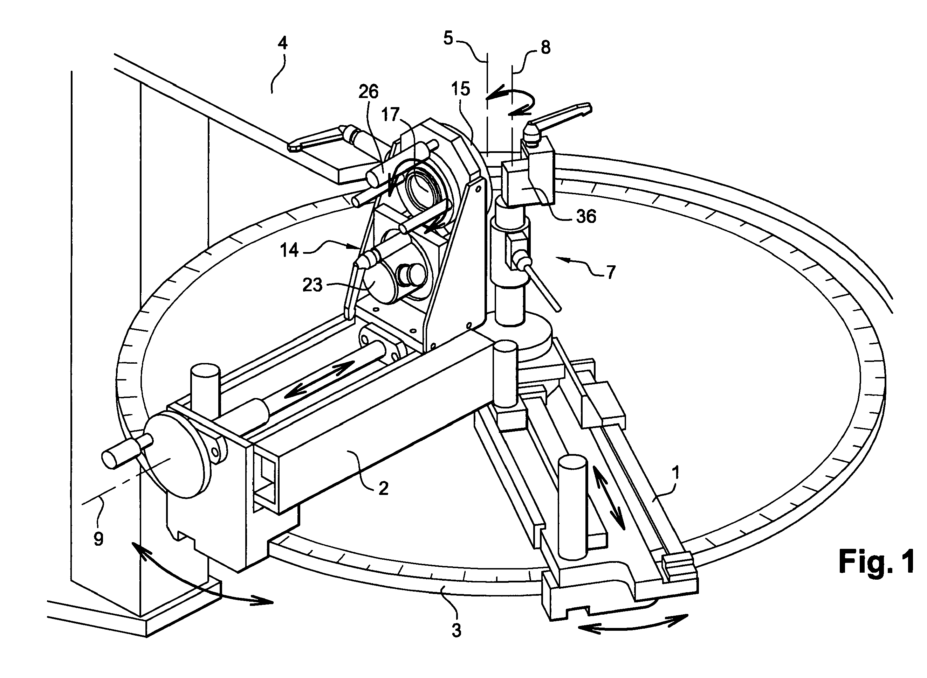

La Figure 1 montre un dispositif pour l'assemblage d'objets orientés selon un mode de réalisation particulier de l'invention. Ce dispositif comprend des moyens de déplacement en rotation autour d'un axe de rotation d'une première 1 et deuxième 2 embases. Avantageusement ces moyens de déplacement en rotation comprennent un plateau circulaire gradué 3 fixé à une table à trous 4 de sorte que cette dernière constitue une continuité du plateau gradué 3. L'axe de rotation 5 est normal à la surface du plateau gradué 3 et passe par son centre. Ainsi le déplacement des première 1 et deuxième 2 embases est circulairement axé au centre du plateau 3. Sur la Figure 1, les première et deuxième embases 1, 2 ont une de leurs extrémités en déplacement sur une partie de la circonférence du plateau circulaire gradué 3. Bien entendu, ce plateau 3 peut présenter au moins un orifice en forme d'arc de cercle dont le centre est confondu avec celui du plateau gradué 3 mais ayant un diamètre inférieur. Cet orifice en forme d'arc de cercle peut recevoir par exemple l'extrémité de la première embase 1, tandis que l'extrémité de la deuxième embase 2 est apte à se déplacer sur le pourtour du plateau gradué 3. Les moyens de déplacement en rotation des première et deuxième embases 1, 2 peuvent également comprendre des moyens d'entraînement en rotation desdites embases 1, 2, par exemple un système d'engrenages et un moteur pas à pas contrôlé par un dispositif de commande.

La première embase 1 présente un premier axe principal 6 perpendiculaire à l'axe de rotation 5 passant par le centre du plateau gradué 3. Ce premier axe principal 6 est contenu dans un plan parallèle à la surface du plateau gradué 3. La première embase 1 comprend des premiers moyens de support 7 des objets. Ces premiers moyens de support 7 sont mobiles en translation le long du premier axe principal 6. Préférentiellement, ils sont également mobiles en rotation autour d'un axe perpendiculaire 8 au premier axe principal 6 et en translation le long de cet axe perpendiculaire 8 pour assurer une totale liberté d'orientation et de positionnement des premiers moyens de support 7 par rapport à l'objet à supporter. La première embase 1 comprend dans un mode de réalisation particulier un rail contenant le premier axe principal 6 et sur lequel est apte à se déplacer en translation une plate-forme. Sur cette plate-forme est fixé, par exemple par des vis, un premier tube cylindrique, ledit tube cylindrique ayant pour axe de symétrie, l'axe perpendiculaire 8 au premier axe principal 6. Un deuxième tube évidé au moins en partie dans le sens de sa hauteur et apte à se déplacer en translation le long du premier tube cylindrique, comprend des moyens de blocage, par exemple une mannette, pour fixer sa position le long du premier tube. La partie non évidé du deuxième tube porte des moyens de préhension 36 par exemple une pince métallique apte à recevoir un objet par exemple un tuyau et des moyens pour bloquer solidement en position cet objet à l'intérieur de ces moyens de préhension. Alternativement, il peut s'agir également d'un mât télescopique portant à son extrémité supérieure des moyens de préhension. Ces moyens de préhension sont montés en rotation sur le deuxième tube ou sur l'extrémité supérieure du mât télescopique.

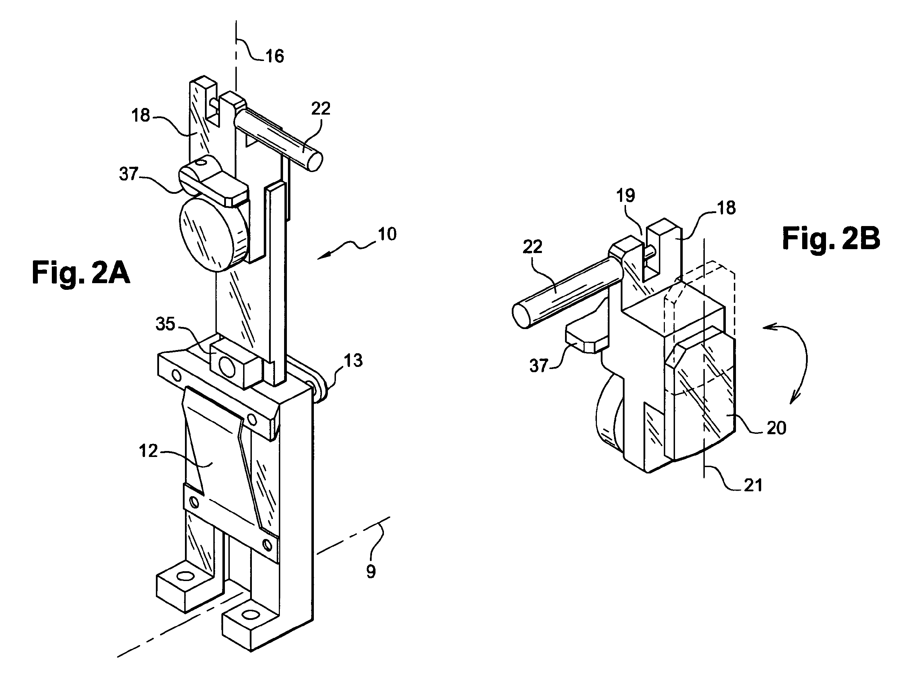

La deuxième embase 2 présente un deuxième axe principal 9 perpendiculaire à l'axe de rotation 5 et qui est donc également contenu dans un plan parallèle à la surface du plateau gradué 3. La deuxième embase 2 comprend des deuxièmes moyens de support 10 des objets recevant par exemple une partie proche d'une extrémité d'un premier objet à assembler. Ces deuxièmes moyens de support 10 sont de manière avantageuse mobiles en translation le long d'un axe perpendiculaire 11 au deuxième axe principal 9 (Figure 2a). La mise en translation des deuxièmes moyens de support 10 est assurée par une lame ressort 12. Un dispositif de verrouillage 13 comprenant par exemple deux vis, permet de maintenir en position les deuxièmes moyens de support 10. Une butée de position 35 détermine une élévation minimale de ces deuxièmes moyens de support 10.

La deuxième embase 2 comprend également un dispositif à plateau tournant 14 destiné à supporter et orienter angulairement un deuxième objet à assembler.

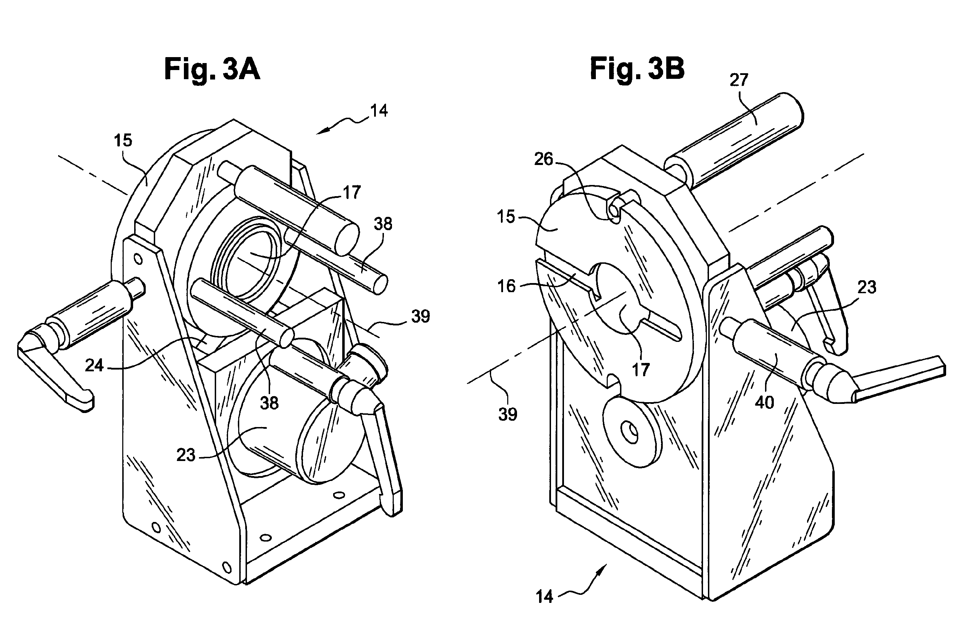

Dans un mode de réalisation préféré et d'après la figure 3, le plateau tournant 15 comprend une rainure en Té 16 ménagée de façon à permettre le support d'un élément de centrage de l'objet à assembler. L'orifice 17 centré sur le plateau tournant 15 permet avantageusement le centrage du deuxième objet à assembler et son positionnement par rapport à l'extrémité du premier objet supporté par les deuxièmes moyens de support 10. Cet élément de centrage comprend un orifice d'axe parallèle à la surface du plateau tournant 15 et des moyens de fixation pour recevoir un adaptateur associé au deuxième objet. Le dispositif à plateau tournant 14 est mobile en translation par rapport aux deuxièmes moyens de support 10 le long du deuxième axe principal 9. Le dispositif à plateau tournant peut ainsi se déplacer le long d'un rail de guidage contenant le deuxième axe principal 9. Le rail de guidage présenté sur la figure 1 est formé par une barre cylindrique et les parois de la deuxième embase 2.

Le dispositif à plateau tournant 14 peut comprendre des moyens d'entraînement en rotation du plateau tournant 15. Ces moyens d'entraînement, comportent par exemple un moteur pas à pas et une vis sans fin et avantageusement des réducteurs. Alternativement, ces moyens d'entraînement comprennent au moins une manette 38 permettant de manoeuvrer manuellement le plateau tournant 15 autour de son axe de rotation 39.

Le dispositif à plateau tournant 14 coopère avec les deuxièmes moyens de support 10 pour définir une zone d'assemblage des premier et deuxième objets. D'après la Figure 2b), les deuxièmes moyens de support 10 comprennent une première paroi de butée 18 fixe comportant une fente 19 destinée à recevoir un des objets et une deuxième paroi de butée 20 parallèle à la première paroi 18 et espacée de cette dernière d'une distance d. La deuxième paroi 20 est mobile en translation le long d'un axe perpendiculaire 21 au deuxième axe principal 9 de façon à pouvoir être montée ou descendue pour faire face (paroi en pointillé) ou non (paroi en trait plein) à la fente 19 de la première paroi 18. Une manette 37 permet par exemple de déplacer manuellement en position haute ou basse cette deuxième paroi 20. On positionne le premier objet à assembler dans la fente 19 des deuxièmes moyens de support 10 de sorte que son extrémité entre en butée sur la deuxième paroi 20, celle-ci étant maintenue en position haute. On fixe alors en position ce premier objet avec des moyens de fixation 22. Puis, on abaisse la deuxième paroi 20 en position basse et on déplace en translation le dispositif à plateau tournant 14 le long du deuxième axe principal 9 vers les deuxièmes moyens de support 10. Une extrémité du premier objet à assembler entre alors en butée sur la première paroi 18 des deuxièmes moyens de support 10 par recouvrement de l'extrémité du premier objet et définit ainsi une zone d'assemblage, par exemple de sertissage, de longueur d.

Le plateau tournant 15 et avantageusement déplaçable en translation le long de l'axe de rotation 39. Une manette 40 permet de verrouiller le plateau tournant 15 en translation le long de l'axe 39. Cette position verrouillée sur l'axe 39 sert de position de référence lors du positionnement et bridage des éléments à assembler. Le plateau tournant 15 est ensuite libéré avant d'effectuer l'opération d'assemblage, par exemple par sertissage, afin de permettre l'allongement occasionné par ce sertissage.

Le dispositif pour l'assemblage d'objets orientés comprend également des moyens de visualisation d'au moins l'angle de rotation du plateau et de la position de la deuxième embase. Ces moyens de visualisation comprennent par exemple un codeur 23 couplé aux moyens d'entraînement en rotation du plateau tournant 15 et un boîtier afficheur. La liaison entre le codeur numérique 23 et les moyens d'entraînement en rotation peut être assurée par des engrenages 24 (Figure 3a). Une fente 25 pratiquée dans le plateau tournant 15 permet grâce à une manette d'indexage 26, une remise à zéro du codeur numérique 23 (Figure 3b).

L'invention concerne également un procédé d'assemblage d'objets orientés, tels que des pièces d'une tuyauterie. On définit tout d'abord un plan de référence 27 de l'assemblage et un plan d'orientation 28, ces plans 27, 28 étant normaux l'un par rapport à l'autre. Puis on effectue les étapes suivantes :
a) on place dans le plan de référence 27 un premier point 29 d'un premier objet 30 à assembler sur des premiers moyens de support 7 et un deuxième point 31 proche d'une extrémité du premier objet 30 sur des deuxièmes moyens de support 10, le premier objet 30 étant alors contenu entre ces deux points 29, 30 dans le plan de référence 27 de l'assemblage,
b) on monte un deuxième objet 32 à assembler sur un dispositif à plateau tournant 14 et on déplace angulairement ce plateau tournant 15 pour orienter le deuxième objet 32 par rapport au plan d'orientation 28, le plan de référence 27 contenant un axe de ce deuxième objet 32,
c) on détermine une zone d'assemblage des objets en déplaçant en translation le dispositif à plateau tournant 14 vers les deuxièmes moyens de support 10 le long d'un axe commun 9 parallèle au plan de référence 27, les premiers moyens de support 7 d'une part, et les deuxièmes moyens de support 10 et le dispositif à plateau tournant 14 d'autre part, étant mobiles en rotation autour d'un même axe de rotation perpendiculaire au plan de référence 27, les premiers moyens de support étant mobiles en translation le long d'un axe perpendiculaire à l'axe de rotation,
d) on assemble ces objets par sertissage, soudure, ou autre.

Après ce premier assemblage, on définit alors un système de coordonnées cartésiennes (x, y, z) en affectant l'origine (0, 0, 0) de ce système à un point de centrage 33 de ce premier assemblage. Avantageusement, le point de centrage 33 est placé à l'intersection des plans de référence 27 et d'orientation 28, l'affectation de l'origine étant réalisée de sorte qu'un autre axe 34 du deuxième objet 32 soit contenu dans le plan d'orientation 28.

On répète éventuellement les étapes a), b), c) et d) pour assembler un nouvel objet à l'assemblage précédemment obtenu, des moyens de visualisation permettant d'affecter des coordonnées (x, y, z) à ces éléments de sorte à permettre leur orientation dans l'espace par rapport à une géométrie d'assemblage.

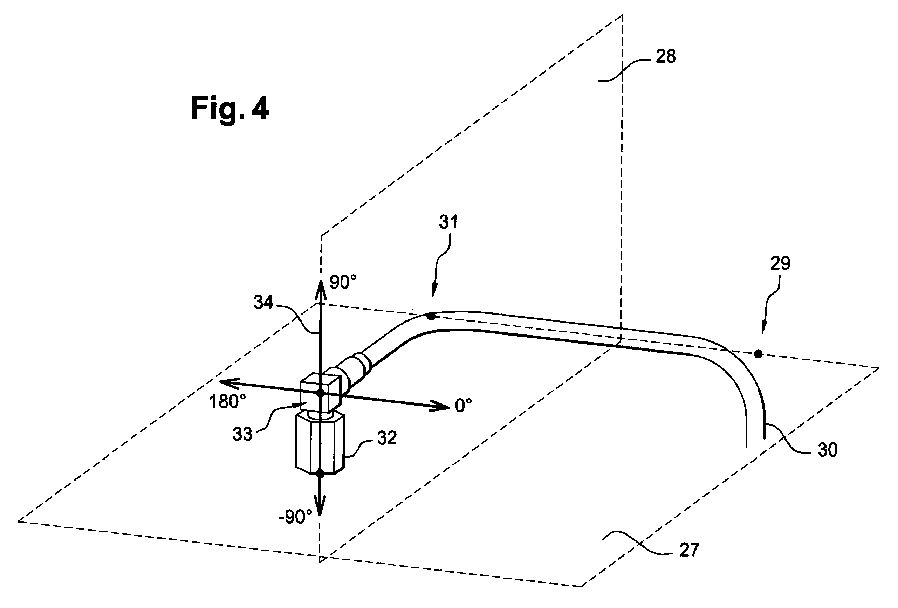

A titre purement illustratif et dans un mode de mise en oeuvre pour l'assemblage d'une tuyauterie à raccords orientés, la figure 4 montre une représentation schématique des plans de référence et d'orientation après sertissage du premier raccord sur un premier tuyau. Le plan de référence 27 comprend le premier cintre venant après l'extrémité assemblée du premier tuyau. L'angle de cintrage peut être compris entre 0° et 180°. La longueur de la tuyauterie finale qui comprend jusqu'à 9 cintres par exemple, peut atteindre 4 m pour un diamètre de tube allant de 6,25 mm à 25, 4 mm.

## Revendications

1. Dispositif pour l'assemblage d'objets orientés, tels que des pièces d'une tuyauterie,
**caractérisé en ce qu'**il comprend
- des moyens de déplacement en rotation (3) autour d'un axe de rotation (5) d'une première et deuxième embases (1, 2),
- ladite première embase (1) ayant un premier axe principal (6) perpendiculaire audit axe de rotation (5) et comprenant des premiers moyens de support (7) desdits objets, lesdits premiers moyens de support (7) étant mobiles en translation le long du premier axe principal (6),
- ladite deuxième embase (2) ayant un deuxième axe principal (9) perpendiculaire audit axe de rotation (5) et comprenant des deuxièmes moyens de support (10) desdits objets et un dispositif à plateau tournant (14) destiné à supporter et orienter angulairement un desdits objets,
- ledit dispositif à plateau tournant (14) étant mobile en translation par rapport auxdits deuxièmes moyens de support (10) le long du deuxième axe principal (9),
- et des moyens de visualisation (23) d'au moins l'angle de rotation du plateau et de la position de la deuxième embase.

2. Dispositif selon la revendication 1, **caractérisé en ce que** le plateau tournant (15) comprend une rainure en Té ménagée de façon à permettre le support d'un élément de centrage.

3. Dispositif selon la revendication 2, **caractérisé en ce que** ledit élément de centrage comprend un orifice d'axe parallèle à la surface du plateau tournant (15) et des moyens de fixation pour recevoir un adaptateur associé à un desdits objets.

4. Dispositif selon l'une quelconque des revendications 1 à 3, **caractérisé en ce que** lesdits premiers moyens de support (7) sont mobiles en rotation autour d'un axe perpendiculaire (8) audit premier axe principal (6) et en translation le long de cet axe perpendiculaire (8), et **en ce que** lesdits deuxièmes moyens de support (10) sont mobiles en translation le long d'un axe perpendiculaire (11) audit deuxième axe principal (9).

5. Dispositif selon l'une quelconque des revendications 1 à 4, **caractérisé en ce que** le dispositif à plateau tournant (14) comprend des moyens d'entraînement en rotation du plateau tournant.

6. Dispositif selon la revendication 5, **caractérisé en ce que** lesdits moyens d'entraînement comprennent un moteur pas à pas et une vis sans fin.

7. Dispositif selon l'une quelconque des revendications 1 à 6, **caractérisé en ce que** ledit dispositif à plateau tournant (14) coopère avec lesdits deuxièmes moyens de support (10) pour définir une zone d'assemblage desdits objets.

8. Dispositif selon la revendication 7, **caractérisé en ce que** lesdits deuxièmes moyens de support (10) comprennent une première paroi de butée (18) fixe comportant une fente (19) destinée à recevoir un desdits objets, une deuxième paroi de butée (20) parallèle à la première paroi (18) et espacée de cette dernière, ladite deuxième paroi (20) étant mobile en translation le long d'un axe perpendiculaire (11) audit deuxième axe principal (9).

9. Dispositif selon l'une quelconque des revendications 1 à 8, **caractérisé en ce que** les moyens de déplacement en rotation des première et deuxième embases (1, 2) comprennent un plateau circulaire gradué (3), ledit axe de rotation (5) étant normal à la surface dudit plateau et passant par son centre.

10. Dispositif selon la revendication 9, **caractérisé en ce qu'**il comprend une table (4) comprenant une surface plane, ladite surface comportant un réseau d'orifices et des troisièmes moyens de support desdits objets, ledit plateau circulaire (3) étant fixé dans le prolongement de ladite table (4).

11. Dispositif selon l'une quelconque des revendications 5 à 10, **caractérisé en ce que** les moyens de visualisation comprennent un codeur (23) couplé auxdits moyens d'entraînement en rotation du plateau tournant et un boîtier afficheur.

12. Procédé d'assemblage d'objets orientés, tels que des pièces d'une tuyauterie, **caractérisé en ce que**,
- on définit un plan de référence de l'assemblage (27) et un plan d'orientation (28), lesdits plans étant normaux l'un par rapport à l'autre, puis on effectue les étapes suivantes :
- a) on place dans le plan de référence (27) un premier point d'un premier objet à assembler sur des premiers moyens de support (7) et un deuxième point proche d'une extrémité dudit premier objet sur des deuxièmes moyens de support (10), ledit premier objet étant alors contenu entre ces deux points dans ledit plan de référence (27) de l'assemblage,
- b) on monte un deuxième objet à assembler sur un dispositif à plateau tournant (14) et on déplace angulairement ledit plateau tournant (15) pour orienter ledit deuxième objet par rapport au plan d'orientation (28), ledit plan de référence (27) contenant un axe dudit deuxième objet,
- c) on détermine une zone d'assemblage desdits objets en déplaçant en translation ledit dispositif à plateau tournant (14) vers lesdits deuxièmes moyens de support (10) le long d'un axe commun parallèle au plan de référence (27), lesdits premiers moyens de support (7) d'une part, et lesdits deuxièmes moyens de support (10) et le dispositif à plateau tournant (14) d'autre part, étant mobiles en rotation autour d'un même axe de rotation perpendiculaire au plan de référence (27), lesdits premiers moyens de support (7) étant mobiles en translation le long d'un axe perpendiculaire (6) audit axe de rotation (5),
- d) on assemble lesdits objets par sertissage, soudure, ou autre,
- on définit alors un système de coordonnées cartésiennes (x, y, z) en affectant l'origine (0, 0, 0) de ce système à un point de centrage (33) de ce premier assemblage,
- on répète éventuellement les étapes a), b), c) et d) pour assembler un nouvel objet à l'assemblage précédemment obtenu, des moyens de visualisation permettant d'affecter des coordonnées (x, y, z) à ces éléments de sorte à permettre leur orientation dans l'espace par rapport à une géométrie d'assemblage.

13. Procédé selon la revendication 12, **caractérisé en ce que** ledit point de centrage (33) est placé à l'intersection desdits plans de référence (27) et d'orientation (28), l'affectation de l'origine étant réalisée de sorte qu'un autre axe dudit deuxième objet soit contenu dans le plan d'orientation (28).

14. Procédé selon la revendication 12 ou 13, **caractérisé en ce que** les moyens de visualisation donnent au moins l'angle de rotation du plateau tournant et de la position de l'axe reliant ledit dispositif à plateau tournant et lesdits deuxièmes moyens de support.

## Claims

1. A device for assembling oriented objects, such as pipework parts,
**characterised in that** it comprises
- means (3) of moving in rotation about a rotation axis (5) of first and second bases (1, 2),
- said first base (1) having a first principal axis (6) perpendicular to said rotation axis (5) and comprising first means (7) of supporting said objects, said first support means (7) being able to move in translation along the first principal axis (6),
- said second base (2) having a second principal axis (9) perpendicular to said rotation axis (5) and comprising second means (10) of supporting said objects and a rotating-plate device (14) intended to support and angularly orient one of said objects,
- said rotating-plate device (14) being able to move in translation with respect to said second support means (10) along the second principal axis (9),
- and means (23) of displaying at least the rotation angle of the plate and the position of the second base.

2. A device according to claim 1, **characterised in that** the rotating plate (15) comprises a T-shaped groove formed so as to enable a centring element to be supported.

3. A device according to claim 2, **characterised in that** said centring element comprises an orifice with an axis parallel to the surface of the rotating plate (15) and fixing means for receiving an adaptor associated with one of said objects.

4. A device according to any one of claims 1 to 3, **characterised in that** said first support means (7) is able to move in rotation about an axis (8) perpendicular to said first principal axis (6) and in translation along this perpendicular axis (8), and **in that** said second support means (10) is able to move in translation along an axis (11) perpendicular to said second principal axis (9).

5. A device according to any one of claims 1 to 4, **characterised in that** the rotating-plate device (14) comprises means of driving the rotating plate in rotation.

6. A device according to claim 5, **characterised in that** said driving means comprises a stepping motor and a worm.

7. A device according to any one of claims 1 to 6, **characterised in that** said rotating-plate device (14) cooperates with said second support means (10) in order to define an assembly zone for said objects.

8. A device according to claim 7, **characterised in that** said second support means (10) comprises a first fixed stop wall (18) comprising a slot (19) intended to receive one of said objects, a second stop wall (20) parallel to the first wall (18) and spaced apart from the latter, said second wall (20) being able to move in translation along an axis (11) perpendicular to said second principal axis (9).

9. A device according to any one of claims 1 to 8, **characterised in that** the means of moving the first and second bases (1, 2) in rotation comprise a graduated circular plate (3), said rotation axis (5) being normal to the surface of said plate and passing through its centre.

10. A device according to claim 9, **characterised in that** it comprises a table (4) comprising a flat surface, said surface comprising a network of orifices and third means of supporting said objects, said circular plate (3) being fixed in line with said table (4).

11. A device according to any one of claims 5 to 10, **characterised in that** the display means comprises a coder (23) coupled to said means of driving the rotating plate in rotation and a display box.

12. A method of assembling oriented objects, such as pipework parts, **characterised in that**
- a reference plane (27) for the assembly and an orientation plane (28) are defined, said planes being normal to each other, and then the following steps are performed:
- a) a first point of a first object to be assembled is placed in the reference plane (27) on first support means (7) and a second point close to one end of said first object on the second support means (10), said first object then being contained between these two points in said reference plane (27) of the assembly,
- b) a second object to be assembled is mounted on a rotating-plate device (14) and said rotating plate (15) is moved angularly in order to orient said second object with respect to the orientation plane (28), said reference plane (27) containing an axis of said second object,
- c) an assembly zone for said objects is determined by moving said rotating-plate device (14) in translation towards said second support means (10) along a common axis parallel to the reference plane (27), said first support means (7) on the one hand and said second support means (10) and the rotating-plate device (14) on the other hand being able to move in rotation about the same rotation axis perpendicular to the reference plane (27), said first support means (7) being able to move in translation along an axis (6) perpendicular to said rotation axis (5),
- d) said objects are assembled by crimping, welding or the like,
- a system of Cartesian coordinates (x, y, z) is then defined, allocating the origin (0, 0, 0) of this system to a centring point (33) of this first assembly,
- if necessary steps a), b), c) and d) are repeated in order to assemble a new object on the assembly previously obtained, display means making it possible to allocate coordinates (x, y, z) to these elements so as to allow their orientation in space with respect to an assembly geometry.

13. A method according to claim 12, **characterised in that** said centring point (33) is placed at the intersection of said reference (27) and orientation (28) planes, the allocation of the origin being performed so that another axis of said second object is contained in the orientation plane (28).

14. A method according to claim 12 or 13, **characterised in that** the display means give at least the rotation angle of the rotating plate and the position of the axis connecting said rotating-plate device and said second support means.

## Patentansprüche

1. Vorrichtung zur Zusammensetzung ausgerichteter Objekte wie den Teilen einer Rohrleitung,
**dadurch gekennzeichnet, dass** die Vorrichtung umfasst:
- Mittel zum Bewegen eines ersten und eines zweiten Sockels (1, 2) in Drehung (3) um eine Drehachse (5),
- der erste Sockel (1) hat eine erste Hauptachse (6) rechtwinklig zur Drehachse (5) und umfasst erste Haltemittel (7) für die Objekte, wobei die ersten Haltemittel (7) beweglich in Translation entlang der ersten Hauptachse (6) sind,
- der zweite Sockel (2) hat eine zweite Hauptachse (9) rechtwinklig zur Drehachse (5) und umfasst zweite Haltemittel (10) für die Objekte und eine Drehtellervorrichtung (14), die dazu vorgesehen ist, die Objekte zu halten und winkelmäßig auszurichten,
- die Drehtellervornchtung (14) ist beweglich in Translation im Verhältnis zu den zweiten Haltemitteln (10) entlang der zweiten Hauptachse (9),
- und Anzeigemittel (23) für mindestens den Drehwinkel des Tellers und die Position des zweiten Sockels.

2. Vorrichtung nach Anspruch 1, **dadurch gekennzeichnet, dass** der Drehteller (15) eine T-förmige Nut umfasst, die ein Zentrierelement aufnehmen kann.

3. Vorrichtung nach Anspruch 2, **dadurch gekennzeichnet, dass** das Zentrierelement eine Öffnung für eine Achse parallel zur Oberfläche des Drehtellers (15) und Befestigungsmittel zur Aufnahme eines mit einem der Objekte verbundenen Adapters umfasst.

4. Vorrichtung nach einem der Ansprüche 1 bis 3, **dadurch gekennzeichnet, dass** die ersten Haltemittel (7) in Drehung beweglich sind um eine zur ersten Hauptachse (6) rechtwinklige Achse (8) und in Translation beweglich sind entlang dieser rechtwinkligen Achse (8), und **dadurch**, dass die zweiten Haltemittel (10) in Translation beweglich sind entlang einer zur zweiten Hauptachse (9) rechtwinkligen Achse (11).

5. Vorrichtung nach einem der Ansprüche 1 bis 4, **dadurch gekennzeichnet, dass** die Drehtellervorrichtung (14) Antriebsmittel zur Drehung des Drehtellers umfasst.

6. Vorrichtung nach Anspruch 5, **dadurch gekennzeichnet, dass** die Antriebsmittel einen Schrittmotor und eine Endlosschnecke aufweisen.

7. Vorrichtung nach einem der Ansprüche 1 bis 6, **dadurch gekennzeichnet, dass** die Drehtellervorrichtung (14) mit den zweiten Haltemitteln (10) zusammenwirkt, um eine Zusammenfügezone der Objekte zu definieren.

8. Vorrichtung nach Anspruch 7, **dadurch gekennzeichnet, dass** die zweiten Haltemittel (10) eine erste feststehende Anschlagswand (18) mit einem Schlitz (19) umfassen, der dazu vorgesehen ist, eines der Objekte aufzunehmen, und eine zweite zur ersten parallele und beabstandete Anschlagswand (20), die in Translation entlang einer zur zweiten Hauptachse (9) rechtwinkligen Achse (11) beweglich ist.

9. Vorrichtung nach einem der Ansprüche 1 bis 8, **dadurch gekennzeichnet, dass** die Mittel zum Bewegen des ersten und des zweiten Sockels (1, 2) in Drehung einen kreisförmigen skalierten Teller (3) umfassen, wobei die Drehachse (5) normal zur Oberfläche des Tellers steht und durch sein Zentrum verläuft.

10. Vorrichtung nach Anspruch 9, **dadurch gekennzeichnet, dass** sie einen Tisch (4) umfasst, der eine ebene Fläche einschließt, die ein Gitter von Öffnungen und dritte Haltemittel für die Objekte aufweist, wobei der kreisförmige Teller (3) in der Verlängerung des Tisches (4) befestigt ist.

11. Vorrichtung nach einem der Ansprüche 5 bis 10, **dadurch gekennzeichnet, dass** die Anzeigemittel einen Kodierer (23), der mit den Antriebsmitteln in Drehung der Drehscheibe gekoppelt ist, und einen Anzeigekasten umfassen.

12. Verfahren zur Zusammensetzung ausgerichteter Objekte wie den Teilen einer Rohrleitung, **dadurch gekennzeichnet, dass**
- man eine Referenzebene des Zusammenbaus (27) und eine Ausrichtungsebene (28) definiert, wobei die Ebenen normal zueinander sind, und man anschließend die folgenden Schritte ausführt:
- a) man ordnet in der Referenzebene (27) einen ersten Punkt eines ersten Objekts zum Zusammensetzen auf den ersten Haltemitteln (7) und einen zweiten Punkt nahe eines Endes des ersten Objekts auf den zweiten Haltemitteln (10) an, so dass das erste Objekt dann zwischen diesen beiden Punkten in der Referenzebene (27) des Zusammenbaus enthalten ist,
- b) man montiert ein zweites Objekt zum Zusammensetzen auf eine Drehtellervorrichtung (14) und bewegt den Drehteller (15) winklig, um das zweite Objekt im Verhältnis zur Orientierungsebene (28) auszurichten, wobei die Referenzebene (27) eine Achse des zweiten Objekts umfasst,
- c) man bestimmt eine Zusammensetzzone der Objekte durch Bewegung der Drehtellervornchtung (14) in Translation in Richtung der zweiten Haltemittel (10) entlang einer gemeinsamen Achse parallel zur Referenzebene (27), wobei die ersten Haltemittel (7) einerseits und die zweiten Haltemittel (10) und die Drehtellervorrichtung (14) andererseits, die beweglich in Drehung um dieselbe zur Referenzebene (27) rechtwinklige Drehachse sind, wobei die ersten Haltemittel (7) beweglich in Translation entlang einer zur Rotationsachse (5) rechtwinkligen Achse (6) sind,
- d) man fügt die Objekte durch Bördeln, Schweißen oder andere Verfahren zusammen,
- man definiert dann ein kartesisches Koordinatensystem (x, y, z) durch Zuordnung des Ursprungs (0, 0, 0) dieses Systems zu einem Zentrierpunkt (33) dieses ersten Zusammenbaus,
- man wiederholt gegebenenfalls die Schritte a), b), c) und d), um ein neues Objekt zum vorherigen Zusammenbau hinzuzufügen, wobei Anzeigemittel es erlauben, diesen Elementen Koordinaten (x, y, z) derart zuzuordnen, dass ihre Ausrichtung im Raum im Verhältnis zu einer Geometrie des Zusammenbaus ermöglicht wird.

13. Verfahren nach Anspruch 12, **dadurch gekennzeichnet, dass** der Zentrierpunkt (33) am Schnitt der Referenz- (27) und der Orientierungsebene (28) angeordnet wird, wobei die Zuordnung des Ursprungs so vorgenommen wird, dass eine andere Achse des zweiten Objekts in der Orientierungsebene (28) enthalten ist.

14. Verfahren nach Anspruch 12 oder 13, **dadurch gekennzeichnet, dass** die Anzeigemittel wenigstens den Drehwinkel des Drehtellers und der Position der Verbindungsachse zwischen der Drehtellervorrichtung und den zweiten Haltemitteln anzeigen.
